Europäisches Patentamt

European Patent Office

Office européen des brevets

(19)

(11) Publication number: **0 284 364**
**A2**

(12) **EUROPEAN PATENT APPLICATION**

(21) Application number: **88302543.9**

(22) Date of filing: **23.03.88**

(51) Int. Cl.⁴: **G 06 F 9/38**

(30) Priority: **27.03.87 JP 75521/87**

(43) Date of publication of application:
**28.09.88 Bulletin 88/39**

(84) Designated Contracting States: **DE FR GB**

(71) Applicant: **SEIKO INSTRUMENTS INC.**
**31-1, Kameido 6-chome Koto-ku**
**Tokyo 136 (JP)**

**Sowa, Masahiro**
**Gokiso-cho Syowa-ku**
**Nagoya-shi Aichi-ken (JP)**

(72) Inventor: **Sowa, Masahiro**
**Gokiso-cho Syowa-ku**
**Nagoya-shi Aichi-ken (JP)**

(74) Representative: **Caro, William Egerton et al**
**J. MILLER & CO. Lincoln House 296-302 High Holborn**
**London WC1V 7JH (GB)**

(54) **High speed computer system.**

(57) A high speed computer system comprises memories (1,2,3) for storing instructions, each memory being arranged to store instructions belonging to the same category; processors (5,9,10) connected to respective memories for executing instructions, each processor having a configuration so as to execute instructions stored in the memory connected thereto and a program counter for designating a memory address under which an instruction to be executed is stored; a data memory (7) connected to one of the processors for storing data used in execution of instructions; and communication lines (12) interconnecting the processors for synchronising execution of each processor.

FIG.1

# Description

## HIGH SPEED COMPUTER SYSTEM

This invention relates to high speed computer systems and, in particular, although not so restricted, to high speed computer systems which have memories storing instructions in order of execution and processing units to execute the instructions under control of program counters.

It is known that a Neumann type computer is one where instructions are executed under control of program counters. A typical Neumann type computer employs single processor architecture in which a single processor processes a series of instructions sequentially. Some improvements in speed have been made to the single processor architecture. However, the improvements made to date are merely an extension of the concepts of the conventional single processor and further attempts along this line to make substantial improvements in processing speed run into problems that cannot be solved by such architecture.

Generally, the larger the number of instruction sets to be processed by a CPU, the more complicated the internal configuration of the CPU and the lower the execution speed of the instruction becomes. For higher execution speed, the total number of instruction sets has to be reduced uniformly and the complexity of the system configuration lowered. This is the so-called reduced instruction set computer.

This method, however, has a limitation because reducing the number of instructions significantly or dividing the instructions into several groups is not possible due to the problem of CPU configuration.

The operation speed of a main memory is generally slower than that of a CPU and with a configuration where the memory is directly connected to the CPU, the overall processing speed depends on the operation speed of the main memory. To increase a data transfer speed, it is a common practice to insert between the CPU and the main memory a relatively small high speed memory, i.e. a cash memory, that can keep up with the operating speed of the CPU and to have data which is reused frequently reside in the cash memory.

Also in the case of instruction fetching, frequently used instructions are made to reside in an instruction cash memory to increase the processing speed.

The use of cash memories causes the following problems. Not all of the data stored during the course of processing is that which is frequently reused. Therefore, data in excess of the capacity of the cash memory may have to be frequently updated. In such a case, the probability that the CPU, when it accesses the cash memory hits desired data is significantly reduced and the CPU may have to access the main memory after all. The execution speed of the CPU is substantially reduced by the limited speed of the main memory. The same is true with the instruction fetch. Depending on the processing, there are instructions that are not so frequently reused. In some cases search for an instruction may result in frequent updating of the instruction cash memory. One typical example of such a case involves the frequent processing of branch instructions. In this case, the instructions in the cash memory require updating and the CPU accesses the main memory to fetch the update instruction in it. As a result, the overall processing speed is adversely affected by the limited speed of the main memory, that is, lowered accordingly.

In addition to the above mentioned problem, the conventional Neumann type computer has some general defects in high speed processing.

Instruction and data are in general stored in a given area in the main memory. The CPU fetches one instruction after another in the main memory through one and the same bus to read and store data. Since the same bus is used, parallel access to instructions and data to increase the speed is not possible.

In the Neumann type computer, instructions are executed sequentially according to the sequence of the program counter. Namely, for the instructions which do not include a branch and therefore can be processed successively, it is possible to prefetch the succeeding instructions by means of a pipeline scheme and process them. In the case of instructions having branch instructions they cannot be prefetched until branch destinations are determined, which interferes with the pipeline processing.

The present invention seeks to provide a high speed computer system which has improved processing speed, which has a simplified configuration of processors, and which has parallel access paths to a data memory and to an instruction memory.

According to the present invention there is provided a high speed computer system characterised by comprising: a plurality of memory means for storing instructions, each memory means being arranged to store instructions belonging to the same category; a plurality of processors connected to a respective one of said memory means for executing instructions, each processor having a configuration so as, in operation, to execute instructions stored in said memory means connected thereto and a program counter for designating a memory address under which an instruction to be executed is stored, said program counter including means for counting up the count value; data memory means connected to one of said processors for storing data used in execution of instructions; and communication line means interconnecting said processors for synchronising execution of each processor.

In one embodiment said memory means comprises a transfer instruction memory for storing data transfer operation instructions, an arithmetic instruction memory for storing arithmetic operation instructions and a branch instruction memory for storing branch operation instructions.

Said plurality of processors may comprise a transfer processor connected to said transfer instruction memory for executing data transfer operation instructions, an arithmetic operation processor connected to said arithmetic instruction memory for executing arithmetic operation instructions and a branch processor connected to said branch instruction memory for executing branch operation instructions.

The high speed computer system may include register means connected to at least one of said processors for storing data temporarily.

The register means may be connected to said transfer processor and to said arithmetic operation processor, said transfer processor, in operation, transferring data between said data memory and said register means and said arithmetic operation processor, in operation, performing arithmetic operations on data stored in said register means.

Said branch processor may have output means for outputting branching addresses to one or more other processors according to destination.

In another embodiment the high speed computer system includes prefetch means connected between each of said memory means and its respective processor for prefetching instructions from said memory means. Said prefetch means may include fetcher means for fetching a plurality of instructions parally and further register means for storing fetched instructions, said fetcher means having counter means for designating starting memory addresses in order to fetch a plurality of instructions stored in said memory means.

The invention is illustrated, merely by way of example, in the accompanying drawings, in which:-

Figure 1 is a block diagram of one embodiment of a high speed computer system according to the present invention;

Figure 2 is a flow diagram illustrating processing flow in the computer system of Figure 1;

Figure 3 is a timing diagram illustrating operation timing of each processor of the computer system of Figure 1;

Figure 4 is a block diagram of another embodiment of a high speed computer system according to the present invention; and

Figure 5 is a timing diagram illustrating operation timing of the computer system of Figure 4.

Throughout the drawings like parts have been designated by the same reference numerals.

In the following embodiment of the present invention, instructions are classified into three groups. One group consists of transfer instructions, such as load or store instructions, calling for transferring of data between a data memory and an accumulator or register. The second group consists of arithmetic operation instructions calling for such calculations as addition and multiplication. Also bit operations are included in this group. The third group consists of branch instructions that control the sequence of execution of the instructions. Bit test operations and jumping or branching instructions are included in this group.

The instructions that require a processor to establish synchronism with other processors before executing instructions, are written with synchronisation information.

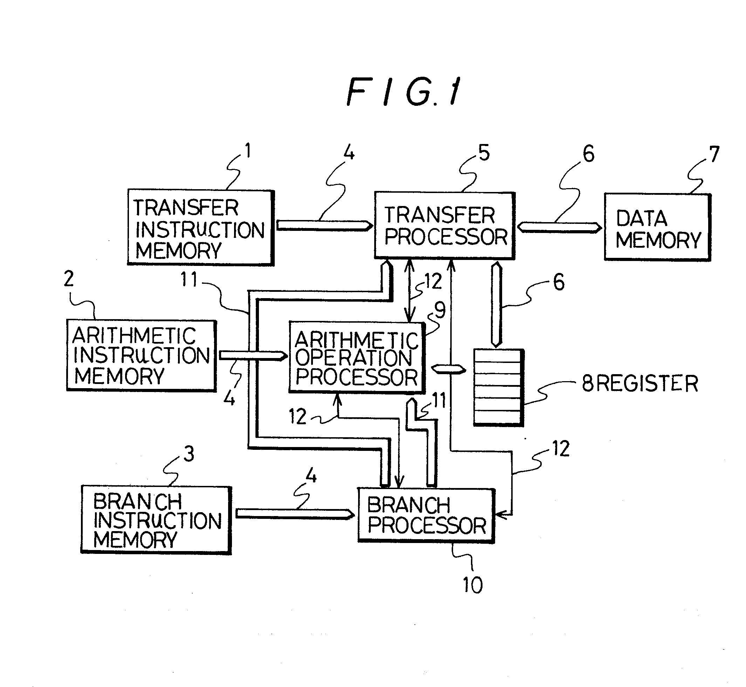

Figure 1 illustrates the configuration of one embodiment of a high speed computer system according to the present invention. A transfer instruction memory 1 contains only transfer instructions belonging to the first group in a specified sequence, that is, the order of execution. An arithmetic operation instruction memory 2 stores only instructions belonging to the second group in the order of execution. A branch instruction memory 3 contains only branch instructions belong to the third group.

The transfer memory 1 is connected to a transfer processor 5 through an instruction bus 4. The transfer processor 5 is one dedicated to executing efficiently only the transfer instructions so that the configuration is simplified. The transfer processor 5 incorporates a program counter which is used when reading the instructions out of the transfer memory 1. The transfer processor 5 is connected with a data memory 7 and a register 8 through a bi-directional data bus 6. The transfer processor 5, according to the count value of its program counter, reads a specified instruction from the transfer instruction memory 1. According to the contents of the instruction read out, the transfer processor 5 transfers data to and from the data memory 7 and the register 8. Examples of such operations include reading specified data from the data memory 7 and loading it in a specified register, or conversely, reading data from a specified register and storing it to a specified location in the data memory 7.

The arithmetic operation instruction memory 2, as with the transfer instruction memory 1, is connected with an arithmetic operation processor 9 through the instruction bus 4. The arithmetic operation processor 9 is one dedicated to performing only arithmetic calculations at high speeds and has a program counter. The arithmetic operation processor 9 is connected with the register 8 through a bus and, according to the count value of the program counter, reads an instruction from the arithmetic operation instruction memory 2 and performs operation on data stored in the register.

The branch instruction memory 3 is connected with a dedicated branch processor 10 through the instruction bus 4. The branch processor 10 has a program counter and, according to the count value of the program counter, reads an instruction from the branch instruction memory 3. The branch processor 10 is connected with the transfer processor 5 and the arithmetic operation processor 9 through an address transfer bus 11. The branch processor 10, after executing an instruction read out, sends a branch destination address obtained based on the result of the execution to the transfer processor 5 and to the arithmetic operation processor 9 through the address transfer bus 11. Upon receipt of the branch destination address, the transfer processor 5 and the arithmetic operation processor 9 change the contents of their program counters. The transfer processor 5, the arithmetic operation processor 9 and the branch processor 10 are interconnected by communication lines 12 to establish synchronism between them. Through the communication lines 12 the processors 5,9,10 exchange information for synchronisation. As mentioned earlier, instructions are, when necessary, provided with a condition to establish synchronism. This condition may, for instance, be an instruction requiring a processor to generate a signal upon completion of the processing of a current instruction and to await for a signal to be supplied from a specified processor before executing the next instruction. Each processor executes the instruction only when the information exchanged through the communication lines satisfies the condition written in that instruction. When synchronisation is not required, the processors execute their instructions independently of each other.

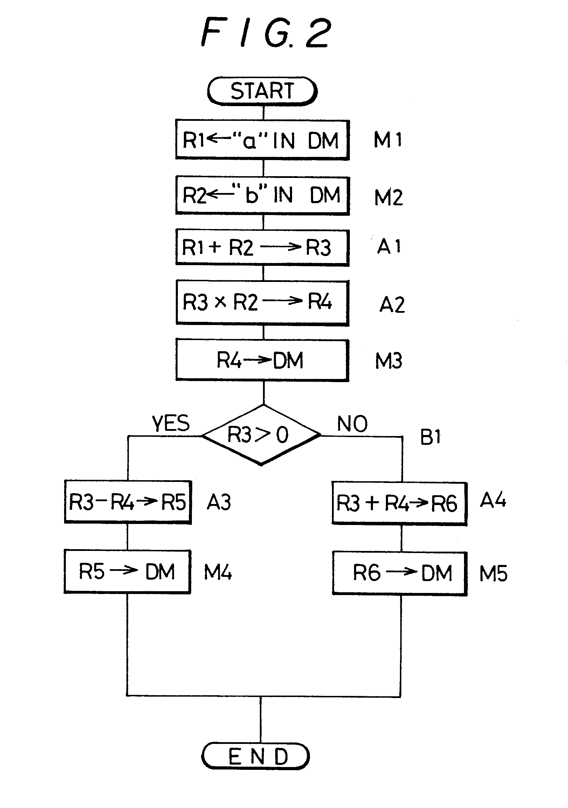

The operation of the computer system of Figure 1 will now be described. The explanation will be made for a series of assumed processing. Suppose two numbers $a$ and $b$ are stored in the data memory 7 and the computer is assigned two calculations: one is to calculate $(a + 2) \times b$ and the other is to calculate $(a + 2) \times (1 - b)$ when $a + 2$ is positive and $(a + 2) \times (1 + b)$ when otherwise. The values obtained from these calculations are to be stored in the data memory 7. This processing is done by first performing a calculation of $(a + 2) \times b$, storing the result in the data memory 7, checking the sign of $+ 2$, either subtracting $(a + 2) \times b$ from $a + 2$ or adding them together depending on the sign of $a + 2$, and then storing the result in the data memory 7. This process flow is shown sequentially in Figure 2.

Although the illustration showing the sequential process flow may not be appropriate because all the instructions are classified into three groups - transfer, arithmetic operation and branch instruction groups - and are parallely processed among the three groups, the processing is explained step by step by referring to the instruction. The processing consists of the following steps: first transferring a value "a" in a data memory to a first register R1 (step M1); transferring a value "b" in the data memory to a second register R2 (step M2); adding 2 to the value stored in the first register and storing the result in a third register R3 (step A1); multiplying the value of the second register R2 by the value of the third register and storing the result in the fourth register R4 (step A2); storing the value of the fourth register in the data memory (M3); checking whether the value of the third register is positive (step B1); when it is found positive, subtracting the value of the fourth register and the value of the third register and storing the result in the fifth register R5 (step A3); and storing the value of the fifth register R5 in the data memory (step M4).

When at the step B1 the result is false, i.e., the value of the third register is not positive, it is added to the value of the fourth register and the result is stored in a sixth register R6 (step A4). This is followed by the value of the sixth register being stored in the data memory (step M5). Now the processing is terminated.

When this series of processings is divided into the three groups, i.e., transfer, arithmetic operation and branch instruction groups, the above-mentioned steps M1, M2, M3, M4 and M5 are classified as a transfer instruction group. At an initialisation stage, they are stored in the transfer instruction memory 1 in that order. The steps A1, A2, A3 and A4 are classified as an arithmetic operation instruction group and stored in the arithmetic operation instruction memory 2. The step B1 is classified as a branch instruction group and stored in the branch instruction memory 3. The instructions M1 and M2 are appended with additional information that requires the transfer processor 5 to send a signal to the arithmetic operation processor 9 after executing those instructions. The instructions M3, M4 and M5 have additional information which requires the transfer processor 5 to wait for a signal from the arithmetic processor 9 before executing those instructions. The instruction A1 has additional information which requires the arithmetic operation processor 9 to wait for a signal from the transfer processor 5 before executing that instruction and, upon completion of the execution, send a signal to the branch processor 10. The instruction A2 is provided with additional information that requires the processor 9 to wait for a signal from the transfer processor 5 before executing that instruction and upon completion of the execution, send a signal to the transfer processor 5. The instructions A3 and A4 are supplemented with information that requires the processor 9 to wait for a signal from the branch processor 10 before executing those instructions and, upon completion of the execution, sends a signal to the transfer processor 5. The instruction B1 is given additional information that requires the branch processor 10 to wait for a signal from the arithmetic operation processor 9 before executing that instruction and, upon completion of the execution, sends a signal to the processor 9.

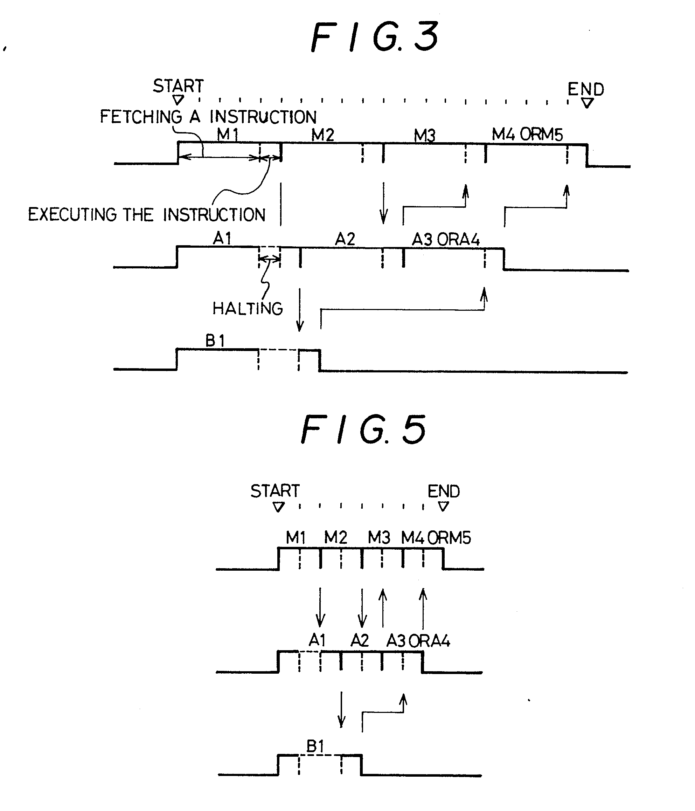

Figure 3 shows the operation timing of each of the above processors with the diagrams, from top to bottom representing the transfer processor 5, the arithmetic operation processor 9 and the branch processor 10. The arrows in the diagram show the flow of signals exchanged among the processors. In Figure 3 the reading of an instruction is shown to take four times the execution time (actually about 10 times the execution time). The processors are assumed to read the next instruction immediately after executing the preceding instruction without delay. If at this time the instruction just read in is the one that can be executed immediately after the preceding instruction, the processor proceeds to execute this instruction. However, when the processor has to postpone the execution of the instruction to establish synchronism with other processors, it halts until the required condition is met.

Now, when an instruction arrives calling for the execution of the above mentioned series of processings, the transfer processor 5, the arithmetic operation processor 9 and the branch processor 10 each read the first instructions M1, A1 and B1 according to the values of their respective program counters. The instruction M1 has no additional information and therefore the transfer processor 5 immediately executes this instruction. On the other hand, the instructions A1 and B1 are provided with the above mentioned additional information. At the present stage, the required conditions are not met and the arithmetic operation processor 9 and the branch processor 10 just halts without executing the instructions.

The transfer processor 5, after finishing the execution of the instruction M1, outputs a signal to other processors informing that the instruction M1 has been executed. At the same time the transfer processor 5 increments its program counter and fetches the next transfer instruction M2 from the transfer instruction memory 1. The instruction M2, like the instruction M1, also does not have additional information and thus is immediately executed. In parallel with this processing, the arithmetic operation processor 9 that has received a signal representing the completion of execution of the instruction M1 from the transfer processor 5, now proceeds to execute the instruction A1 whose execution can only be done upon reception of that signal. When it completes the execution of the instruction A1, the arithmetic operation processor 9 sends an execution completion signal to the outside. At the same time, the processor 9 increments its program counter to read the next instruction A2. The instruction A2 is provided with additional information that calls for execution of that instruction only after the instruction M2 is executed by the transfer processor 5. At this point, the instruction M2 has already been executed and the instruction A2 therefore is immediately processed. In the meantime, the branch processor 10 receives the A1 completion signal from the arithmetic operation processor 9 and proceeds to execute the instruction B1 which is already read in. The branch processor 5 determines a branch destination according to the result of the instruction A1 processed by the arithmetic operation processor 9, outputs to each processor through the address transfer bus 11 an instruction address at the destination, and, upon completion of this processing, sends to other processors a signal indicating that the instruction B1 has been executed. The transfer processor 5 after finishing the M2 processing outputs the M2 processing completion signal to other processors. At the same time, the transfer processor 5 increments its program counter and reads in the next instruction M3. In the meantime, the arithmetic operation processor 9, when it receives the M2 processing completion signal from the transfer processor 5, starts executing the instruction A2. The instruction M3 cannot be executed until the arithmetic operation processor 9 finishes the processing of the instruction A2. However, by the time the instruction M3 is completely read in, the instruction A2 has already been executed. Thus the instruction M3 is immediately processed. The arithmetic operation processor 9, upon completion of the execution of the instruction A2, immediately takes in the next instruction. The next instruction to be fetched is either instruction A3 or instruction A4 and the processor 9 determines which instruction to read according to the instruction address at the branch destination that has been sent from the branch processor 10. That is, the arithmetic operation processor 9 writes the instruction address supplied in its own program counter and reads the instruction A3 or A4 from the arithmetic operation memory 2 according to the value of the program counter. At this point, the processing of instruction B1 is already completed, so that the instruction A3 or A4 is immediately executed. In parallel with this processing, the transfer processor 5, when it completes the processing of instruction M3, writes in its program counter the instruction address at the branch destination sent from the branch processor 10. According to the value of its program counter, the transfer processor 5 now reads the next instruction M4 or M5. Since at this point the arithmetic operation processor 9 has already completed the processing of instruction A3 or A4, the transfer processor 5 immediately proceeds to execute the instruction M4 or M5. With the instruction M4 or M5 executed, this series of processings is terminated. In this embodiment, the arithmetic operation processor and the branch processor are running almost in parallel with the transfer processor and this reduces the overall processing time to less than a half.

Another advantage of this embodiment is that since each processor needs only process its assigned group of instructions, the configuration can be simplified resulting in a substantial increase in the operation speed over the conventional processors.

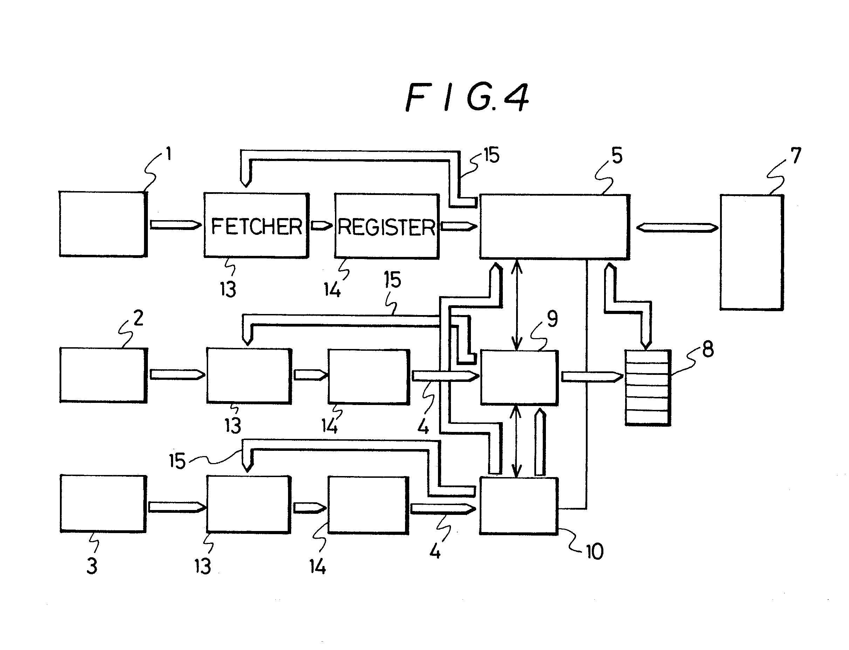

Figure 4 shows another embodiment of a high speed computer system according to the present invention which is fundamentally the same as the preceding embodiment. Consequently, like parts have been designated by the same reference numerals. The only difference is that the instruction fetchers 13 and registers 14 are inserted between the instruction memories 1,2,3 and the processors 5,9,10. This configuration increases the instruction reading speed thereby further reducing the overall processing time. The fetchers 13 are connected to the instruction memories 1,2,3 through independent buses and also have their own counters therein. The outputs of the instruction fetchers are each connected to the associated instruction register 14. The instruction registers 14 each store a plurality of instructions and are capable of operating at high speeds following the operation of the associated processors. These registers are connected to the processors 5,9,10 through buses to allow the processors to read instructions from the register 14. The fetchers 13 and the processors 5,9,10 are connected with each other through fetch address transfer buses 15. The processors 5,9,10 according to the result of the execution of branch instructions, update the counters of the associated fetchers 13 through the fetch address transfer buses 15. This causes an instruction at a branch destination to be read and stored into the register 14. The instruction fetchers 13 read a plurality of data parallely from the instruction memories 1,2,3 according to their own counters either lower the level of parallelism of the data or convert it into serial data, and then store the data successively into the registers 14 at high speed. The instruction fetchers 13 act as a speed buffer between the instruction memories which are slow in operation and the registers and processors that can operate at high speed. Figure 5 shows the operation timing of the processors with the above configuration when the same processing as performed by the first embodiment is executed. It is assumed that the processors take in the instructions four times faster than when the processors are directly connected to the instruction memories. This means that the processors can read the instruction in the same duration of time that they execute the instruction. With this embodiment, the overall processing time is half that of the preceding embodiment and, when compared with the conventional processors, can execute the entire processing in less than one-fifth the processing time of the conventional processors.

While in the above two embodiments the instructions are divided into groups beforehand and stored in independent memories, it is possible to substitute this by a scheme of providing an original program memory containing various kinds of instructions that are not classified into groups and an instruction fetching unit that reads instructions, classifies them into groups and distributes the groups of instructions to the associated processors.

As described in the foregoing, the embodiments of the present invention enable high speed processing at a level which was difficult to achieve with the conventional computer systems that process instructions sequentially, and thus the present invention has a very high potential for industrial application.

**Claims**

1. A high speed computer system characterised by comprising: a plurality of memory means (1,2,3) for storing instructions, each memory means being arranged to store instructions belonging to the same category; a plurality of processors (5,9,10) connected to a respective one of said memory means for executing instructions, each processor having a configuration so as, in operation, to execute instructions stored in said memory means connected thereto and a program counter for designating a memory address under which an instruction to be executed is stored, said program counter including means for counting up the count value; data memory means (7) connected to one of said processors for storing data used in execution of instructions; and communication line means (12) interconnecting said processors for synchronising execution of each processor.

2. A high speed computer system as claimed in claim 1 characterised in that same plurality of memory means (1,2,3) comprises a transfer instruction memory (1) for storing data transfer operation instructions, an arithmetic instruction memory (2) for storing arithmetic operation instructions and a branch instruction memory (3) for storing branch operation instructions.

3. A high speed computer system as claimed in claim 2 characterised in that said plurality of processors comprise a transfer processor (5) connected to said transfer instruction memory (1) for executing data transfer operation instructions, an arithmetic operation processor (9) connected to said arithmetic instruction memory (2) for executing arithmetic operation instructions and a branch processor (10) connected to said branch instruction memory (3) for executing branch operation instructions.

4. A high speed computer system as claimed in any preceding claim characterised by register means (8) connected to at least one of said processors for storing data temporarily.

5. A high speed computer system as claimed in claim 4 when dependent upon claim 3 characterised in that said register means (8) is connected to said transfer processor (5) and to said arithmetic operation processor (9), said transfer processor, in operation, transferring data between said data memory (1) and said register means (8) and said arithmetic operation processor, in operation, performing arithmetic operations on data stored in said register means.

6. A high speed computer system as claimed in claim 3, 4 or 5 characterised in that said branch processor (10) has output means (11) for outputting branching addresses to one or more other processors (5,9) according to destination.

7. A high speed computer system as claimed in any preceding claim including prefetch means (13,14) connected between each of said memory means (1,2,3) and its respective processor (5,9,10) for prefetching instructions from said memory means.

8. A high speed computer system as claimed in claim 7 characterised in that said prefetch means includes fetcher means (13) for fetching a plurality of instructions parallely and further register means (14) for storing fetched instructions, said fetcher means having counter means for designating starting memory addresses in order to fetch a plurality of instructions stored in said memory means.

9. A high speed computer system for execution of instruction flow under control of program counters comprising: a plurality of memory means for storing instructions; each memory means storing instructions belonging to same category; a plurality of processors connected one to one to said plurality of memory means for executing instructions; each processor having a simplified configuration so as to execute instructions stored in said memory means connected to the processor high speed and a program counter for designating a memory address under which an instruction to be executed is stored, said program counter including means for counting up the count value; data memory means connected to one of said processors for storing data used in execution of instructions; and communication lines interconnecting said processors for synchronising execution of each processors.

# F I G. 1

0284364

# F I G. 2

START

| R1←"a" IN DM | M1 |

| R2←"b" IN DM | M2 |

| R1 + R2 ⟶ R3 | A1 |

| R3 × R2 ⟶ R4 | A2 |

| R4→DM | M3 |

YES ◇ R3 > 0 NO B1

| R3 − R4 → R5 | A3 |     | R3 + R4 → R6 | A4 |

| R5 → DM | M4 |     | R6 → DM | M5 |

E N D

0284364

# F I G. 3

START
FETCHING A INSTRUCTION
M1  M2  M3  M4 ORM5

EXECUTING THE INSTRUCTION
A1  A2  A3 ORA4

HALTING

B1

END

# F I G. 5

START  END

M1  M2  M3  M4 ORM5

A1  A2  A3 ORA4

B1

# F I G. 4

0284364